# EUROPEAN PATENT SPECIFICATION

(11) **EP 2 939 529 B1**
(45) Date of publication and mention of the grant of the patent: **15.09.2021**
(21) Application number: 15397514.9
(22) Date of filing: 20.04.2015
(51) Int. Cl.: A01G 23/00

(54) **A METHOD AND A SYSTEM FOR CONTROLLING THE CRANE OF A FOREST MACHINE**
VERFAHREN UND SYSTEM ZUR STEUERUNG DES KRANS EINER FORSTMASCHINE
PROCÉDÉ ET SYSTÈME PERMETTANT DE COMMANDER LA GRUE D'UNE MACHINE FORESTIÈRE

(30) Priority: 29.04.2014 FI 20145398
(43) Date of publication of application: 04.11.2015
(73) Proprietor: John Deere Forestry Oy, 33100 Tampere (FI)
(72) Inventor: Palmroth, Mikko, 33270 Tampere (FI); Laitinen, Simo, 33800 Tampere (FI); Siltanen, Vesa, 33720 Tampere (FI); Käppi, Timo, 37120 Nokia (FI)
(74) Representative: Berggren Oy

(56) References cited:
- EP-A1- 2 674 828
- EP-A1- 2 719 274
- EP-A2- 1 889 537
- WO-A1-2013/137801
- WO-A1-2014/133435
- SE-A1- 1 350 220

## Description

### Field of the invention

The invention relates to a method for controlling the crane of a forest machine. The invention also relates to a system for implementing the method according to the invention in a forest machine.

### Background of the invention

Conventionally, the crane of a forest machine is normally controlled in such a way that the driver of the forest machine manipulates actuators for moving the different booms of the crane independently of each other so that the crane head and a tool mounted on it (for example, a harvester head or a loading grapple) are moved along paths required for the operations relating to this work performance. In controlling the crane, the aim is to make the different motions of the crane as continuous, smooth and fast as possible, so that as little time as possible is taken for performing the different operations, but without causing a risk to the equipment and safety at work. When applying the above mentioned control method in practice, it has been found that the best way to arrange the controllers is to provide the cabin with typically two controllers (for example, control levers of the joystick type), one for each hand of the driver. By movements of these controllers in different directions, as well as by auxiliary controllers provided in them and manipulated by fingers (for example, rocker levers manipulated by the thumb), a sufficient number of control functions are provided, having a suitable duration and timing in relation to each other, for actuating the movements and functions of the crane and the actuators of the tool mounted on its head that are required for performing the operation in question. In other words, when using the control method of prior art, each operation to be carried out with the crane involves a series of control functions, in which each control function has to have an exactly suitable duration and timing with respect to the other control functions so that the crane will move in a way required by the operation.

Work with a forest machine always involves operations with routine movements of the crane. For example when the grapple of a forwarder is applied for loading tree trunks into the load space, bringing the trunk into the load space is followed by a routine operation in which the grapple is transferred from the load space back to the vicinity of a stack of trunks next to the forest machine, for gripping the next trunk. Such operations which are repeated a number of times during the same work performance are thus almost identical with each other; in other words, certain control functions are repeated which the user actuates by always applying the different controllers in a very similar way. In spite of this, for implementing the series of control functions required for the operation, the driver of the machine always has to be careful and attentive, *inter alia* because obstacles may be present in the vicinity of the paths, to be taken into account when making the movements, so that when performing such a routine operation, the path of the crane does not accidentally deviate from the intended path in such a way that any part (most probably the tool on the crane head) would hit an obstacle in the vicinity of the path, such as, in the case of the forwarder, the bunks of the load space. Moreover, it should be possible to stop the movement of the crane easily and quickly during the operation, because the working conditions in the forest may change; for example, there can be an obstacle in a path that was previously suitable (for example, because the forest machine has moved to another felling site and there is a tree or a branch, or the like, in the path that was used previously). Therefore, it has not been reasonable to automate the movements of the crane in the same way as the movements of *e.g.* an industrial robot, but it is preferable that the driver of the forest machine is in control all the time when moving the crane of the forest machine, and can select the paths according to the conditions, as he/she deems appropriate.

Publication EP 2 674 828 A1 describes a control devices for working machines such as forest machine. These control devices can be used to make controlling of a working machine having several controllable degrees of freedom easier for the driver of the machine. This is because the feedback feeling of the switches are improved and because the amount of separate buttons in one controller is reduced by having switches which can have two or more different states and thus can applied for providing several control signals by means of single switch.

### Brief summary of the invention

The aim of the invention is to present a novel method for controlling the crane of a forest machine, wherein operations consisting of different movements of the boom of the crane can be controlled more simply and easily than before and, if desired, with fewer separate control functions actuated by different controllers, but wherein the driver of the forest machine will remain in control of the operation so that the driver of the forest machine, wishing to do so, can quickly stop performing out the operation if this is necessary under the circumstances on site. It is also an aim of the invention to implement the above mentioned novel control method in such a way that no new separate controllers will be needed for this in the forest machine, and also in such a way that the use of the previously known control method will still be possible. Moreover, it is an aim of the invention to present a system for implementing the method according to the invention.

The invention is based on the idea that the functions of an operation consisting of several different movements of the booms of the crane are controlled - not by several distinct control functions having a definite duration and being possibly controlled by more than one controller - but by such a control function of a single controller that is effective on something else than the movements of the different booms of the crane, in such a way that this control function effective on something else than the movements of the booms of the crane is maintained for a time longer than a predetermined threshold time and further a desired time but not longer than the duration of performing of the operation, wherein the operation to be controlled will thus proceed from the initial situation as long as said control function is maintained (after the threshold time), at most until said operation is completed. Moreover, the control function to be applied for the control is selected so that it will not, during this operation, change the mode of the actuator to be primarily controlled by said control function; in other words, applying the control function will not cause, during the operation, controlling of other functions than the movements of the boom required for the desired operation. To put it more precisely, the method according to the invention is characterized in what will be presented in the characterizing portion of claim 1, and the system according to the invention is characterized in what will be presented in the characterizing part of claim 14.

The method and the system according to the invention have the advantage that the driver of the forest machine does not need to control all the operations to be performed by the crane by applying several controllers and several control functions to be actuated by them (solely manually), but at least some of the operations to be carried out with the crane can be actuated by applying a single controller and a single control function actuated by it. In other words, the method according to the invention facilitates the control of the crane and reduces the load and the stress of the driver of the forest machine, caused by the performing of the work, compared with the control method of prior art which is entirely manual. This kind of a semi-automatic method has, however, the advantage of being simpler, more secure and easier to implement under demanding logging conditions than a method in which the movements in the operation were fully automated (as in an industrial robot). Yet another advantage of such a system compared with the operation of a fully automated crane is that the movements of the crane remain fully controlled by the driver of the forest machine, wherein there is no need for real-time monitoring (by machine) of obstacles and changes in them around the crane, and a control system based thereon, which would be difficult to implement under logging conditions.

It should be noted that in the present application text, the terms used for describing the control of the crane and the other functions of the forest machine refer to the following:
- a function is an action set off by one or more actuators or other electric, mechanical or hydraulic devices of the forest machine, or a combination of these. Thus, functions include, for example, functions set off by different actuators of the forest machine, such as the movement of one or more booms of the crane, the turning of the delimbing blades against a tree trunk, the sawing movement of the saw, or the feeding movement of the feeding rollers, or a series of working motions consisting of several single working motions. However, functions also include any other actions controlled by the controllers in the forest machine, such as the updating of the display in the cabin, a change in the rotational speed of the engine, or the headlights coming on and off.
- a controller is a device for controlling a function, for example a control lever, a key in a keyboard, a rocker lever, a switch, a switch button, or a key displayed graphically on a touch display, *etc.*
- a control function refers to the changing of the state of a controller to a control position or another state that will cause the control of a function, for example the turning of a control lever forward, backward, to the left, or to the right; the pressing of a key in a keyboard; the turning of a rocker lever in either direction; or the touching of an icon on a touch display. Thus, one controller can be applied to set off one or more control functions.
- a primary function refers to a function that is primarily controlled by a control function intended for controlling it. In addition to the primary function, one control function that is different from a control function for controlling different booms of the crane, can be used for controlling an operation to be carried out by the crane.
- being controlled refers to a function being started, stopped, or adjusted, or another change in the state of the function.
- threshold time refers to the time taken from the moment of starting a control function, other than controlling the crane, to the moment of starting the control of the operation to be carried out with the crane.
- an operation refers to a routine consisting of one or more functions and comprising a step relating to work with the forest machine. For example, in loading of trunks into the load space of a forwarder, one operation consists of moving a trunk from a stack into the load space of the forwarder, another operation consists of placing the trunk into the load space, a third operation consists of moving the grapple back to the stack, *etc.*
- a forwarder refers to a forest machine having a load space for tree trunks and a crane and a grapple suitable for loading the trunks.

### Description of the drawings

In the following, the invention will be described in more detail with reference to the appended drawings, in which
- Fig. 1: shows an operation to be implemented by the crane of a forest machine, controlled according to the method of the invention;
- Fig. 2: is a flow chart showing the principle of operation of controlling the operation shown in Fig. 1;
- Fig. 3: shows another operation to be implemented by the crane of the forest machine, controlled in a way according to the method of the invention;
- Fig. 4: is a flow chart showing the principle of operation of controlling the operation shown in Fig. 3;
- Fig. 5: is a schematic view showing the couplings between the crane of the forest machine, a control unit in the forest machine, as well as the controllers applied for controlling the crane; and
- Fig. 6: is a schematic view showing how the loading grapple is transferred between the middlemost bunks of the load space, from the inside of the load space to the outside of the load space, or from the outside of the load space to the inside of the load space.

### Detailed description of the invention

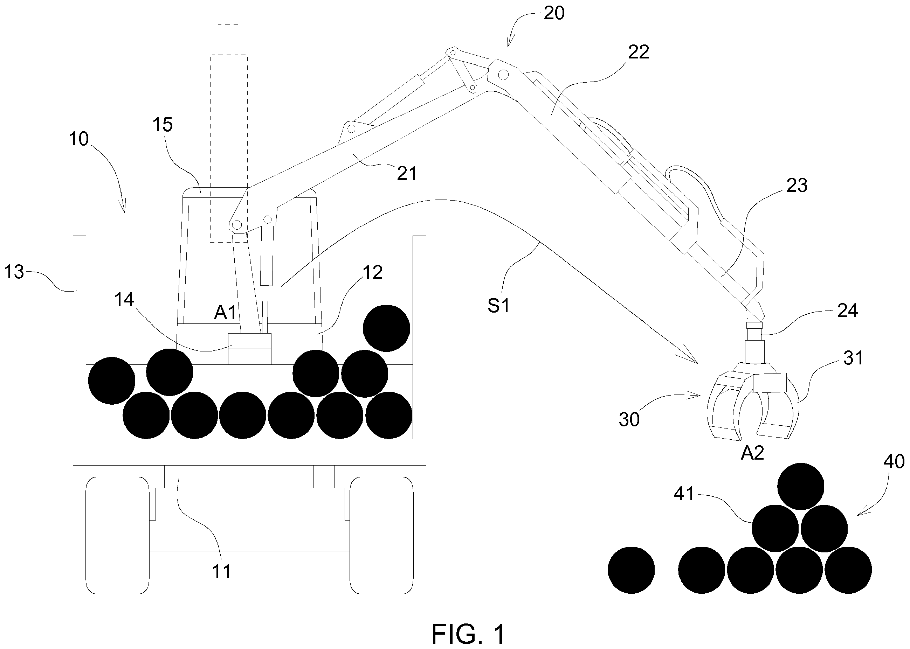

The method according to the invention can be applied in a variety of forest machines. The forest machine shown in Fig. 1 is a forwarder 10 intended for transporting felled tree trunks out of a forest. In this embodiment, the forwarder 10 is a forwarder whose mechanical structure is known as such, having a load space 12 for transporting tree trunks 41 in the space between bunks 13 in the rear part of the frame 11, and whose front part is equipped with a driving and hauling apparatus, a cabin 15, and a crane 20 therebetween, consisting of a hoisting boom, 21 a knuckle boom 22 and an extension boom 23. The crane 20 is mounted on the frame 11 of the forwarder by means of a slewing table 14 placed between the cabin 15 and the load space 12 so that it can be turned from one side of the forwarder to the other with respect to an upright axis transverse to the frame 11. The hoisting boom 21 is mounted by a joint on the slewing table 14, the knuckle boom 22 is mounted by a joint at the end of the hoisting boom 21, and the extension boom 23 is fitted at the end of the knuckle boom, to be movable in its longitudinal direction so that it can move from the end of the knuckle boom to the inside of the knuckle boom 22 and protrude from it. Hydraulic actuators 101 to 104 functioning in a way known as such are provided between the hoisting boom 21 and the slewing table 14, between the hoisting boom 21 and the knuckle boom 22, and between the knuckle boom 22 and the extension boom 23, for turning the hoisting boom 21 with respect to the slewing table 14, the knuckle boom 22 with respect to the hoisting boom 21, and for moving the extension boom 23 in and out of the knuckle boom 22.

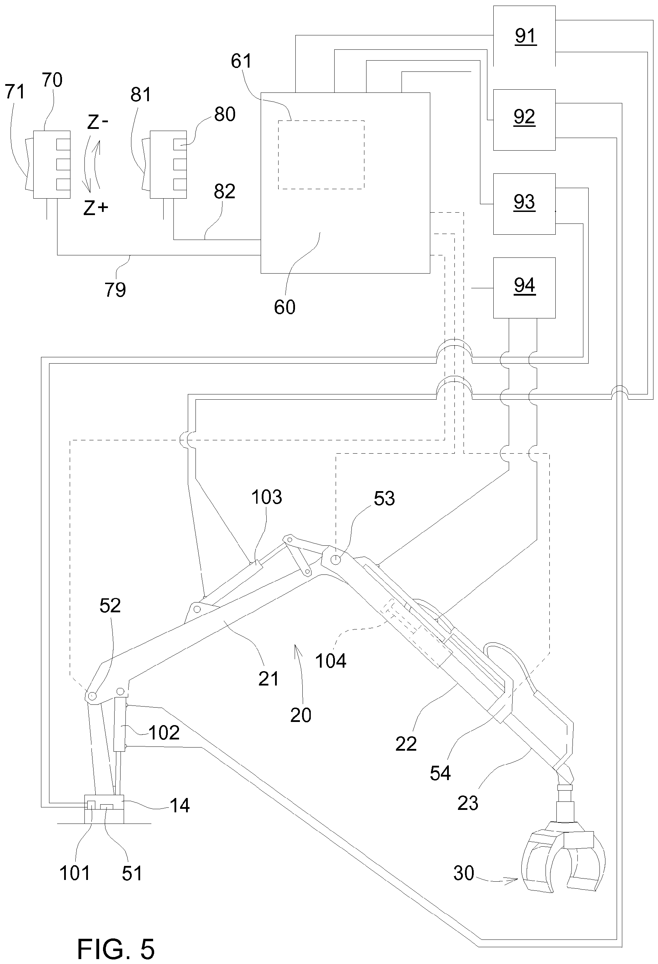

Controlling the forwarder 10 and the crane 20 is configured to be carried out from the cabin 15 placed in the front part of the frame 11. For this, the cabin 15 is equipped with various controllers known as such, for example a control lever 70 for the left hand and a control lever 80 for the right hand, shown in Fig. 5, as well as rocker levers 71 and 81 provided in them for controlling e.g. the movement of the crane 20 as well as the closing and opening of the gripping members 31 of the loading grapple 30 at the head 24 of the crane, by control functions set off by these controllers. During the control, the control commands generated by the control functions actuated by the control lever 70 for the left hand and the control lever 80 for the right hand, are transferred from these controllers along communication buses 72 and 82 to a control unit 60 that actually takes care of controlling the actuators setting off various functions of the crane 20 and the grapple 30, by controlling magnetic valves 91 to 94 of the hydraulic actuators 101 to 104 of the crane in a way required by the control functions actuated by the control levers 70 and 80.

The control unit 60 of the forwarder 10 shown in Fig. 1 comprises a memory 61, in which functions and/or operations to be actuated by several single control functions can be stored. The storing takes place by teaching the operation to the control unit 60, for example by performing the operation in a way known as such, by manually controlling the crane 20 and simultaneously storing the control functions required for performing the operation in the memory 61 of the control unit 60. The storing can be done, for example, by selecting a specific storing mode by means of a keyboard or a touch screen in the cabin 15, which storing mode can be started at the beginning of the operation and stopped at the end of the operation, by pressing the respective key or icon on the touch screen. In this way, operations stored in the memory 61 of the control unit 60 can be run later on so that the control unit 60 will control the actuators 101 to 104 of the crane 20 by implementing the control functions stored in the memory, with the same duration and timing as when they were stored in the memory in the storage step. In other words, when running an operation stored in the memory, the control unit 60 will implement the functions which are set off by the driver via control levers 70 and 80 in the cabin 15 when the corresponding operation is controlled manually; that is, at its simplest, the control of the crane 20 for performing an operation is carried out as a kind of sequential control. Therefore, in the simplest embodiment of the method, no feedback coupling is provided from the actuators 101-104 or the crane 20 to the control unit, but the control takes place by repeating the taught control functions in a given order, scaled by a running speed that can be adjusted by the controller controlling the operation. All or some of the functions/operations stored in the memory 61 can be taught and stored in the memory of the control unit already during or after the manufacture of the forwarder in the factory.

After the teaching, the control function by which the operation is to be controlled is also stored in the memory 61 of the control unit 60. For this, for example a key of a keyboard in the cabin can also be provided, to be pressed, or an icon on a touch screen, to be touched, before storing the control function intended for controlling the operation. For this, the control unit does naturally not store the duration of the control function but only the information on the control function to be used for controlling the operation stored above.

In the forwarder 10 shown in Figs. 1 to 5, however, measuring elements 51 to 54, known as such, are installed on the slewing table 14, in the joint between the slewing table 14 and the hoisting boom 21, in the joint between the hoisting boom 21 and the knuckle boom 22, and between the knuckle boom 22 and the extension boom 23. The measuring elements 51 to 53 for measuring the position of the slewing table (the angle of rotation with respect to a given initial position), the angle of the hoisting boom and the knuckle boom with respect to each other and the slewing table, can be e.g. suitable angle sensors known as such, and the measuring element 54 for measuring the movement of the extension boom can be *e.g.* a linear sensor known as such. In such an embodiment of the method according to the invention, the measuring elements 51 to 54 are connected to the control unit 60 in such a way that the control unit 60 receives measurement data produced by the measuring elements. By means of the measurement data, the control unit 60 determines the position of the slewing table 14, the hoisting boom 21, the knuckle boom 22, and the extension boom 23 and, on the basis of this, the position of the crane head 24 and thereby also the position of the loading grapple 30 with respect to a selected zero point, as well as corrects the lengths of the control functions performed by it, if the path of the crane head 24 deviates from that stored in the memory of the control unit 60 in the phase of teaching the operation (according to data from the measuring elements 51 to 54). By means of such feedback coupling, the control unit 60 can control the crane head 24 and the loading grapple 30 connected to it, to travel along a path corresponding to the operation slightly more accurately than in an embodiment in which the measuring elements 51 to 54 are not applied and in which the control of the operation is based solely on the iteration of the control functions stored in the memory.

With the measuring elements 51 to 54, the position, speed and acceleration of any point in the crane 20 or the grapple 30 therein can be determined with respect to a given zero point. A suitable zero point is, for example, the pivot of the slewing table in relation to the frame 11 of the forwarder. The zero point can also be, in principle, any other point in the forwarder which remains stationary in relation to the frame 11. It is thus possible to determine the location of the head 24 of the crane 20 in relation to this zero point and thereby to use the control unit 60 for controlling the crane head 24 and the grapple 30 mounted on it to travel along a desired path by using so-called "tip control", wherein the control unit 60 continuously controls the movements of the actuators 101 to 104 of the crane in such a way that the crane head 24 would travel along the taught path as closely as possible.

In Fig. 1, the forwarder 10 has been driven next to a stack of tree trunks 41 previously felled and delimbed by a harvester. The aim is to load trunks 41 from the stack 40 into the load space 12 of the forwarder 10. When moving trunks 41 into the load space 12, the grapple 30 at the head 24 of the crane 20 is moved by moving the hoisting boom, the knuckle boom 22 and the extension boom 23 of the crane 20 onto the stack 30, after which the grapple 30 is used to grip the topmost trunk 41 in the stack 40 and to transfer it into the load space 12 of the forwarder 10. In the load space 12, the grapple is lowered to a suitable height and moved to a suitable location where the trunk 41 can be dropped to the bottom of the load space or onto trunks 41 already placed there, by opening the gripping members 31 of the loading grapple 30. The grapple 30 is then transferred, by moving the hoisting boom 21, the knuckle boom 22 and the extension boom 23 of the crane 20, from the load space 12 back to the top of the stack 40 next to the forwarder 10, after which the next trunk 41 is gripped again and hoisted into the load space 12.

In this embodiment of the method according to the invention, the control of the operation of loading trunks 41, where the empty grapple 30 is moved back onto the stack 40, is implemented in a way according to the method of the invention. The operation is controlled by a control function that opens the gripping members 31 of the grapple 30, that is, in this case by a controller that controls the opening and closing of the grapple 30, because it is the same controller that can be used for actuating the control functions controlling both of these functions. In the forwarder 10 shown in Fig. 1, said controller is a rocker lever 81 in the control lever 80 for the right hand placed in the cabin 15, which can be turned in one direction (direction Z+) to open the gripping members 31 of the grapple 30, and in the other direction (direction Z-) to close them. It should be noted that after the trunk 41 has been released from the grapple 30 (the grapple being in the load space), the grapple 30 is fully open, wherein the control function (i.e. turning the rocker lever in the first direction) by which the grapple 30 is turned open will no longer cause a change in the functional state of the grapple 30. Therefore, this control function can, in this situation, be utilized for controlling the next operation to be performed by the crane 20, in a way according to the method of the invention. The operation of the rocker lever 81 in the control lever 80 is provided with an adjustment of the speed of performing the operation in such a way that the velocity of the crane head 24 will become steplessly the higher, the more the rocker lever is turned in the controlling direction Z+.

Figure 1 shows the position of the crane 20 at the beginning of the operation when the crane head 24 with the grapple 30 mounted on it is in a first location A1 in the load space 12, above the trunks 41 already loaded therein. For performing the complete operation, the crane head 24 with the grapple 30 is transferred from said first location A1 to a second location A2 along a travel path S1. The travel path S1 is such that the crane 20 or the grapple 30 mounted on its head 24 will not hit the bunks 13 of the load space 12 nor any other obstacles in this area.

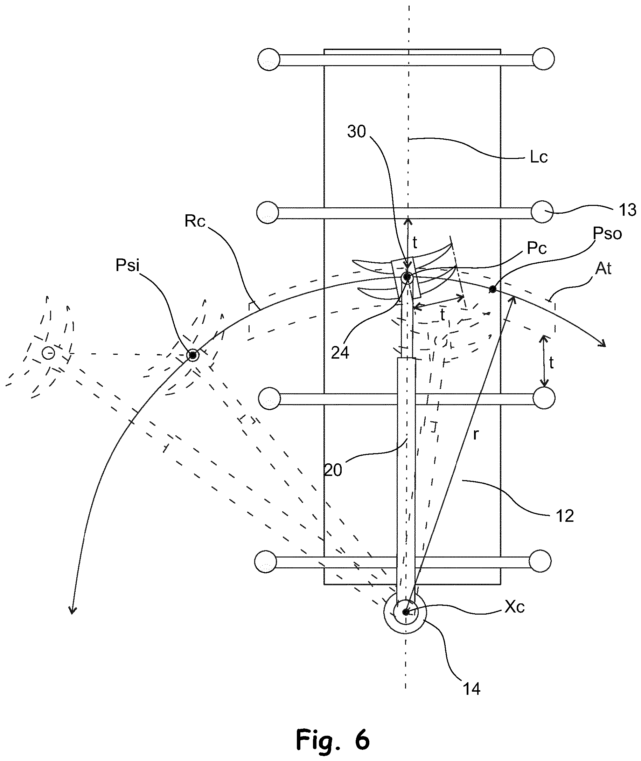

The grapple 30 can be transferred from the location A1 to the location A2 above the bunks 13 (as shown in Fig. 1). Alternatively, the travel path can extend, for example, between the two middlemost bunks 13 in the longitudinal direction of the load space 12, as shown in Fig. 6. In this case, the crane head 24 with the grapple 30 mounted on it can, for example, first be guided to a so-called centering point P_{c}, or to an outward swivelling point Pₛₒ on an arc R_{c} extending via this point, which is a circular arc, both points being located between the middlemost bunks 13 in the longitudinal direction.

The centering point P_{c} is selected from a in figure 6 shown target area At in the centre of the load space 12. The target area At is an area from which the grapple 30 can be moved out of the load space 12 merely by slewing the crane 20 by rotating the slewing table 14 *(i.e.* by slewing the whole crane 20 in relation to a vertical rotation axis X_{c} placed at its mounting point) so that the grapple will hit neither of the two middlemost bunks 13 in the longitudinal direction of the load space. Because the position of the bunks 13 of the load space can be changed steplessly in the longitudinal direction of the load space, the location and size of the target area At will depend on the location of the bunks 13. Therefore, in the longitudinal direction *(i.e.* the Y direction) of the load space 12, the centering point P_{c} can be a point for which the distance between an arc R_{c} passing through the point (and having a radius r equal to the distance between the crane head 24 and the rotational axis X_{c} of the slewing table 14) and the middlemost bunks 13 in the longitudinal direction of the load space 12 (the grapple 30 being aligned with these bunks 13 in the width direction of the load space 12) is at least equal to the distance t between the outermost point of the grapple 30 mounted at the crane head 24, with respect to the fastening point of the grapple 30, and the fastening point of the grapple 30.

It follows that the possible location for the centering point P_{c} will depend, not only on the location of the bunks 13 but also on the external dimension of the grapple 30 in the longitudinal direction of the load space 12. Normally, when e.g. trunks are loaded in the load space 12, the position of the grapple 30 is such that the gripping members 31 are parallel to the width direction of the load space 12, wherein the fact whether the grapple 30 is open or closed will normally not affect its external dimension in the longitudinal direction of the load space 12. If the external dimension of the grapple 30 in the longitudinal direction of the load space 12 is clearly smaller than the distance between the middlemost bunks 13, the number of possible centering points P_{c} is large (that is, the target area At is wide), and if it is close to the distance between the bunks 13, the number of possible centering points P_{c} is small (that is, the target area At is narrow.)

In the case of Fig. 6, the centering point is selected from the centre line L_{c} of the load space. However, if desired, the centering point P_{c} can also be selected so that it is on either side of the centre line L_{c}. Moreover, in some cases, the centering point P_{c} could also be placed between two other bunks 13 than the two middlemost bunks 13, if the grapple 30 is to be moved between such bunks 13 out of the load space. This is one of the reasons why the centering point P_{c} should be defined in such a way that the driver of the forwarder searches out a suitable location for the centering point P_{c} by steering the crane head 24 manually to a position, from which its swivelling out of the load space 12 can be implemented merely by rotating the slewing table, and stores this point in the memory 61 of the control unit 60. In this way, the control unit 60 will know the location of the centering point P_{c} and be capable of automatically steering the crane head 24 to the centering point P_{c}. In practice, a new centering point P_{c} always has to be searched out the first loading time, at least after an adjustment of the position of the bunks 13, if the length of the trunks is significantly changed in relation to the preceding loading time, or in case the bunks 13, between which the loading grapple 30 is to be swivelled, are to be changed.

The loading grapple 30 can be transferred to the centering point P_{c} in such a way that upon loading of trunks, the crane head 24 with the grapple 30 is automatically moved to the centering point P_{c} when the crane is swivelled from the outside of the load space 12 to the load space. Thus, if a trunk to be loaded is incorrectly aligned with respect to the load space 12 (in the longitudinal direction of the load space), the driver can move the crane 20 manually by steering the grapple 30 before lowering the trunk into the load space. After dropping the trunk and opening the grapple 30, the control system 60 can be programmed to attempt to return the grapple 30 to the centering point P_{c} when starting to swivel the crane 20 in either direction away from the centre line L_{c} of the load space (that is, from the direction in which the crane is parallel with the longitudinal direction of the load space, seen from above). In practice, in this situation, however, the loading grapple 30 will no longer return to the centering point P_{c} but only to a point on the arc R_{c} passing through it, that is, to a so-called outward swivelling point Pₛₒ, because the crane head 30 will then have sufficient time to swivel away from the centre line L_{c} of the load space 12. However, the swivelling has to be implemented in such a way that the grapple 30 will have sufficient time to move onto the swivelling arc R_{c} before the crane 20 will have swivelled to a position where the grapple 30 or at least part of it will be aligned with the bunks 13 in the width direction of the load space 12. This can be done, for example, so that the control unit 60 automatically limits, if necessary, the swivelling speed of the slewing table so much that the crane head 24 will reach the swivelling arc R_{c} before the crane 20 will have achieved such a position. This can also be left, in whole or in part, up to the driver, that is, to be implemented for example so that reaching the swivelling arc R_{c} will induce a signal (e.g. an acoustic signal and/or a notice displayed on a display in the cabin) indicating that the crane head 24 has now reached the swivelling arc R_{c} and thereby the outward swivelling point Pₛₒ on it. In manual control, the driver himself can thus select the outward swivelling point Pₛₒ, that is, manually adjust the swivelling speed as needed so that the crane head 24 will return to the swivelling arc R_{c} before the grapple 30 reaches the bunks 13.

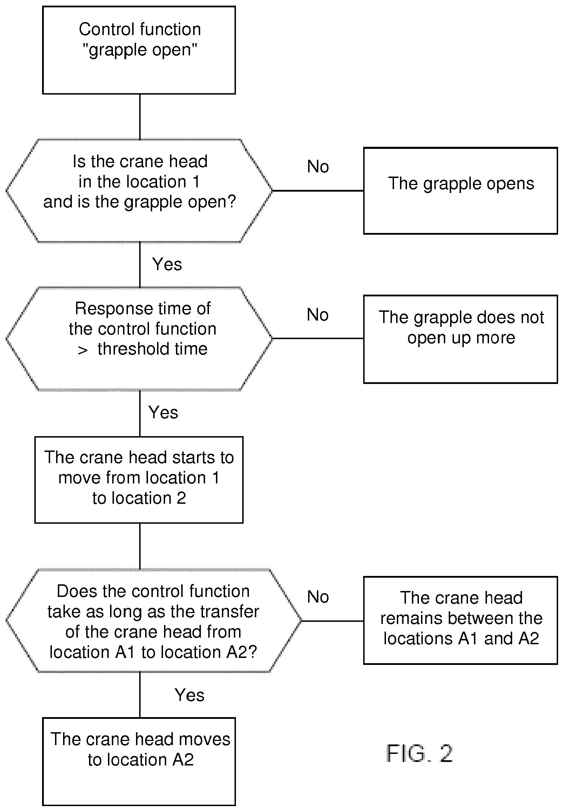

The flow chart shown in Fig. 2 illustrates the principle how the above mentioned operation of the crane 20 of a forwarder shown in Fig. 1 is controlled according to the method of the invention. At the beginning of the operation, when the grapple 30 is in a first location A1 and its gripping members 31 are fully open, the rocking lever 81 of the control lever 30 for the right hand in the cabin 15 is turned upwards to actuate a control function that controls the gripping members 31 of the grapple 31 to open up more. However, they will not open up more because they are already fully open, since at the end of the preceding operation they were already controlled to this position to make sure that the trunk 41 is released from the gripping members of the grapple 30. In other words, said control function will not cause a change in the mode of the grapple 30. When this control function is maintained for a predetermined threshold time, the control unit 60 controlling the functions of the forwarder 10 will start an operation stored in the memory 61, by which the crane 20 will start to move, in a way determined by control functions stored in the memory 61 during a phase of teaching the operation, having a given duration of time, and being activated in a given order, along a travel path S1 towards a location A2, *i.e.* the location from which the transfer of the next trunk to the load space 11 of the forwarder 10 can be started. If the control function is stopped before the grapple 30 has had time to move to the location A2, it will stop at the point in the travel path S1 to which it had advanced by the time. If the control function is maintained further so far that the grapple 30 has time to move to the location A2, it will stop at the location A2 and not move further, because the control unit 60 will by then have accomplished all the control functions stored in its memory 61, to be controlled by the control function for controlling the operation. If the crane head 24 with the grapple 30 is returned to the location A1, the operation can be re-run by maintaining the control function "grapple open", programmed for controlling the operation, for at least the above-mentioned threshold time. If the control function was interrupted before the grapple 30 had moved to the location A2, performing the operation can be continued by resuming the control function, whereby the movement will be continued after a threshold time (a prerequisite for continuing the operation is that the grapple is placed on the taught travel path S1). This has the advantage that the operation can be interrupted at any time by discontinuing the maintenance of the control function, that is, in this embodiment by releasing the rocking lever 81 in the control lever 80 for the right hand. Thus, if the selected travel path is such that instead of the travel path S1 from location A1 to location A2 shown in Fig. 1, the grapple travels, for example, between the two middlemost bunks 13 (as shown in Fig. 6), the above mentioned control function can also be configured to control the crane 20 in such a way that the crane head 24 will first be guided to the centering point P_{c} defined in the above mentioned way, or to an outward swivelling point Pₛₒ on a swivelling arc R_{c} passing through this point, and then move merely by a rotary motion of the slewing table 14 *(i.e.* along the swivelling arc R_{c}) out of the load space and then to the location A2 either directly (if the location A2 is on the arc R_{c}) or by means of an auxiliary movement (if the location A2 is not on the swivelling arc R_{c}).

Moreover, in the embodiment shown in Fig. 2, the control is implemented in such a way that the control unit 60 will take into account the speed for performing the operation, selected via the position of the rocking lever 81, so that it will adjust the lengths of the control functions corresponding to the movements of the different actuators 101 to 104 to be directly proportional to the selected speed, depending on the tilting of the rocking lever. If the speed range is, for example 30 to 100% of the full speed, the control functions formed by the control unit 60 will have, for example at 30%, a duration of t_{30%} = (1/0.3) * t_{100%}, that is, 3.3 times longer than when running with full speed. Thus, the velocities of the actuators naturally have to be adjusted accordingly so that if the velocity of the actuator at full speed is v_{100%}, then at the 30% speed it will be v_{30%} = 0,3*v_{100%} so that the head of the crane 20 would move along the same travel path as when driven at full speed.

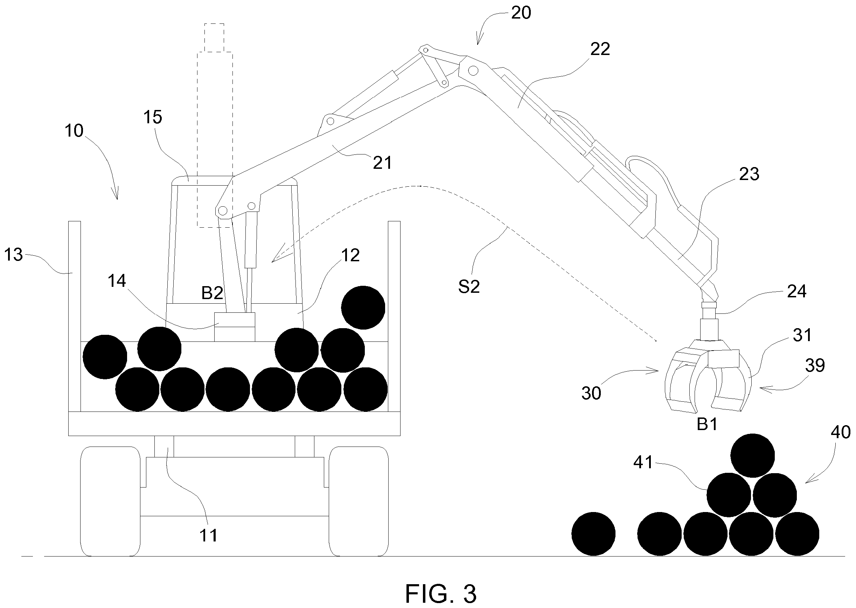

In another embodiment of the method according to the invention, the transfer of the grapple 30, mounted on the crane head 24 of the forwarder 10 shown in Fig. 1, from the vicinity of a stack of trunks 40 outside the load space 12 back to the load space 12 is controlled during unloading the forwarder 10, that is, when trunks 41 are transferred from the load space 12 to a stack 40 to be formed by the side of the forwarder 10. Fig. 3 illustrates this situation. In the operation shown therein, the grapple of the forwarder 10 moves from a first location B1 to another location B2 inside the load space along a travel path S2. Also in this embodiment, it is possible to apply a control function whose primary function is opening of the grapple *(i.e.* the rocking lever 81), because also in this case, the preceding function that was carried out before returning the grapple 30 to the load space 12 was opening 31 of the gripping members of the grapple 30. Moreover, it is simultaneously ensured that the grapple 30 is empty before starting to move it.

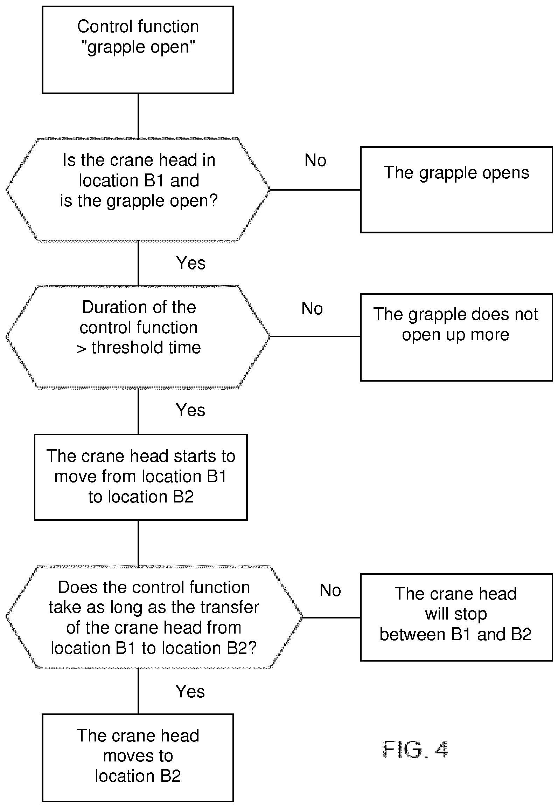

The principle of controlling the operation shown in Fig. 3 is illustrated in the flow chart of Fig. 4. When the crane head 24 and the grapple 30 are in the location B1 outside the load space, the rocking lever in the control lever 80 for the right hand is turned upwards, that is, in the direction Z+, whose the primary control function is to open the gripping members 31 of the grapple 30. In the same way as in the embodiment shown in Figs. 1 and 2, the gripping members 31 are also fully open already when the operation is started, so that no change in their mode will take place if the control function is maintained for a time shorter than a given threshold time. When the control function is maintained for a time of at least this predetermined threshold time, or longer, the control unit 60 will start the control of an operation stored in its memory 61. In this case, the control functions stored in the memory 61 at the teaching phase will control the grapple 30 from the location B1 outside the load space 12 along a travel path S2 to a location B2 inside the load space 12, from which trunks 41 are to be moved to a stack 40 in location B1 by the side of the forwarder. Also in this embodiment, the movement of the crane 20 can be stopped before the grapple 30 has reached the location B2 by maintaining the control function for a time shorter than the threshold time and the time taken for moving the grapple 30 from the location B1 to the location B2. A control function of such length or longer will make the grapple 30 move to the location B2. Further, also in this embodiment of the method, the velocity of the crane 20 can be adjusted by changing the position of the rocking lever 81, whereby the durations of the control functions and the velocities of the actuators 101 to 104 will be scaled in a way corresponding to that presented above in the embodiment shown in Figs. 1 and 2.

In this embodiment of the method according to the invention, the transfer of the grapple from the outside to the inside of the load space 12 can also be implemented, instead of the travel path S2 shown in Fig. 3, alternatively in such a way that the empty grapple 30 is guided into the load space 12 in the way shown in Fig. 6, between the two middlemost bunks 13 (or also some other bunks) in the longitudinal direction of the load space 12. Thus, the grapple 30 outside the load space is first guided to a point on the swivelling arc R_{c} passing through the centering point P_{c}, that is, to a so-called inward swivelling point Pₛᵢ. This can be done in a fully automatic way by maintaining the control function Z+ by the rocking lever 81 for a time longer than a given threshold time or by starting to swivel the crane towards the load space 12 or by moving the crane 20 by fully manual control, whereby the reaching of the swivelling arc R_{c} will induce a signal in the cabin indicating that the crane head 24 is placed on the arc R_{c}, that is, the inward swivelling point Pₛᵢ has been reached. After the crane head 24 has moved automatically or it has been moved by manual control to the inward swivelling point Pₛᵢ on the swivelling arc R_{c}, it can be moved to the inside of the load space by slewing the crane 20 merely by rotating the slewing table 14 (automatically or manually), that is, by slewing the crane merely with respect to the vertical rotary axis X_{c} at its mounting point. The crane head 24 with the grapple 30 will then move to the centering point P_{c} along the swivelling arc R_{c}. If the centering point P_{c} is not the point B2 to which the crane head 24 was to be brought, the grapple can be moved to the desired point inside the load space 12 by moving the different booms of the crane 20 in a suitable way so that the crane head 24 is brought to this target point B2 inside the load space along a suitable/desired travel path.

The transfer of the grapple 30 from the load space 12 to the outside, as well as the transfer of the grapple 30 from the outside to the inside of the load space 12 have been described above. In both cases it is possible to take into account the height of the load in the load space 12, for example in such a way that in the load space 12, the height at which the grapple 30 is stopped is automatically stored/can be stored manually, if desired, in the memory 61 of the control unit 60. After this, next time the grapple 30 is brought into the load space 12, the control unit 60 will control the crane so that the grapple 30 will not move lower than this previous position but will stop at the height of at least this preceding level. From this position, the grapple 30 can be lowered e.g. manually (if trunks are being unloaded from the load space), or it can be left further up (if trunks are being loaded into the load space). By this function, the position of the crane head 24 with the grapple 30 is brought to the right level in the height direction, the height of the load being changed as trunks are loaded into or unloaded from the load space 12.

In the above described way, the crane 20 can also be controlled so that when a control function is maintained for a time longer than a given threshold time, the crane 20 is moved, for example from one of the above-mentioned working positions (the grapple 30 being inside or outside the load space 12) automatically or semi-manually (e.g. by utilizing the above described swivelling movement) to the transport position, *i.e.* the position in which the crane 20 with the grapple 30 mounted on it should be maintained during driving, or in a maintenance position in which the crane 20 and/or the grapple 30 can be easily serviced and/or repaired, or in which position a part of the crane 20 and/or *e.g.* the grapple 30 can be removed in the easiest way and, for example after maintenance, reparation or replacement, be remounted on the crane head 24. Automatic transfer to the transport or maintenance position could be activated, for example, by maintaining the control function Z- of the controller 81 *(i.e.* the control function closing the grapple) for a time longer than a given threshold time, because in the transport or maintenance position of the grapple 30, its gripping members 31 are normally turned against each other.

The method according to the invention can also be applied to forest machines other than forwarders. For example in the case of a harvester, the operation to be controlled according to the invention could be, for example, bringing the crane and the harvester head to a transport position or from the transport position to the working position so that the harvester head is placed in a location that is suitable for starting to work. When bringing the crane and the harvester head to the transport position, the control of the operation could be started, for example, by a control function that turns feed rollers and/or delimbing blades against each other (to the closed position), whereby the driver merely applies this control function longer than a given threshold time, with the result that the different booms of the crane and the feed rollers and delimbing blades of the harvester head are turned into a position that takes as little space as possible, and are moved into a place that is most advantageous for the transport, that is, a place where they are kept when the forest machine is loaded on a transport vehicle, when the forest machine is driven to another felling site, or when work with the forest machine is stopped at the end of the working day. In a corresponding way, the crane and the harvester head could be made ready for starting the harvesting work from the transport position for example by a control function that opens the feed rollers and/or the delimbing blades. Similarly, bringing the crane and the harvester head to the maintenance position and back to the working position could be performed according to the routines described above. In the case of the harvester, the maintenance position of the crane is the position where the crane, a part of it, or the harvester head can be easily serviced, repaired and/or removed, if necessary, for example for replacement.

Naturally, the control function that activates the control of a whole operation can also be a control function for controlling another function than the closing or opening of the grapple. One might as well use, for example, a control function whose primary function is, for example in a harvester, to tilt or release the tilt of the harvester head, depending on the position of the harvester head at the beginning of the operation to be controlled by the single control function. Further, also other functions, in which the control function used for controlling does not cause a change in the mode of the primary function at the beginning of the operation activated by applying said control function. The control function activating the control of the operation can also be programmed so that it will only activate the control of the operation when the crane head is in a given area (*e.g.* within a given range from a given starting point of the operation) or when *e.g.* a given key or combination of keys of a keyboard placed in the cabin has been pressed before starting the control function for controlling the operation, so that the crane control mode according to the method of the invention has been activated before starting the control function programmed for controlling the whole operation. The invention is thus limited to the scope of the claims.

## Claims

1. A method for controlling the crane of a forest machine, in which method the crane (20) of the forest machine (10) and at least another function than moving the crane (20) are controlled by a control unit (60) being controlled by control functions activated by controllers (70, 71, 80, 81) in the forest machine (10), **characterized in that** maintaining the control function controlling primarily another function than moving the crane (20) for a time longer than a given threshold time will activate an operation in which the crane head (24) will move along a predetermined travel path (S1; S2) from a first location (A1; B1) to a second location (A2; B2), or there between, if said control function has a shorter duration than the time taken for the crane head (24) to move from the first location (A1; B1) to the second location (A2; B2), but longer than said threshold time.

2. The method according to claim 1, **characterized in that** actuators (101 to 104) for moving the crane (20) are controlled by the control unit (60) in the forest machine, having a memory (61) in which the control functions including at least one operation can be stored and from which the stored control functions can be executed by means of control functions used for controlling another control function than for controlling the movements of the operation.

3. The method according to claim 2, **characterized in that** the travel path of the crane head (24) corresponding to the operation is taught to the control unit (60) by moving the crane head (24) from the first location (A1; B1) to the second location (A2; B2) along a desired travel path (S1; S2) by using the primary control functions, and simultaneously by storing the control functions corresponding to this travel path (S1; S2) in the memory (61) of the control unit (60).

4. The method according to claim 2 or 3, **characterized in that** the position and the location of the crane (20) of the forest machine (10) are measured by measuring elements (51 to 54) in the crane (20) or the actuators (101 to 104) for moving the same, and that the movements of the different booms (21 to 23) of the crane (20), and/or the actuators (101 to 104) for moving the same are stored in the memory (61) in the control unit (60).

5. The method according to any of the claims 2 to 4, **characterized in that** the teaching of the operation is followed by storing the control function for controlling primarily another function than moving the crane (20), which is maintained for a time longer than said threshold time, to activate the operation to be performed by the crane (20).

6. The method according to any of the claims 1 to 5, **characterized in that** the control function, by which the operation is controlled, is a control function activated by a controller (81) in the forest machine (10), which does not activate a function in the actuator to be primarily controlled by it during the performing of said operation, because said actuator to be primarily controlled is already in a state where its continued control by said control function will not activate further operation of said actuator.

7. The method according to any of the claims 1 to 6, **characterized in that** the method is used for controlling the crane (20) in a forwarder (10).

8. The method according to claim 7, **characterized in that** a control function taking longer than said threshold time will activate an operation in which the head of the crane (20) will move from a first location (A1) in the load space (12) of the forwarder (10) to a second location (A2) outside the load space (12).

9. The method according to claim 7, **characterized in that** a control function taking longer than said threshold time will activate a work motion in which the crane head will move from a first location (B1) outside the load space (12) of the forwarder (10) to a second location (B2) inside the load space (12).

10. The method according to claim 8 or 9, **characterized in that** the operation is controlled by applying a control function for activating the opening of the gripping members (31) of a grapple (30) mounted on the crane head (24).

11. The method according to any of the claims 7 to 10, **characterized in that** when the grapple (30) mounted on the crane head (24) is moved from the inside of the load space (12) of the forwarder (10) to the outside of the load space (12), the crane head (24) is first moved to a centering point (P_{c}) inside the load space (12) or to an outward swivelling point (Pₛₒ) on a swivelling arc (Rc) passing through it, the arc being a circular arc, the points (P_{c} and Pₛₒ) being points between two bunks (13) in the longitudinal direction of the load space (12), from which points the crane head (24) can be moved merely by slewing the crane (20) with respect to a vertical swivelling axis (X_{c}) placed on its mounting point, to the outside of the load space (12) so that the grapple (30) mounted on the crane head (24) has sufficient space to pass between the two bunks (13) without touching them.

12. The method according to claim 11, **characterized in that** when the grapple (30) mounted on the crane head (24) is moved from the outside of the load space (12) of the forwarder (10) to the inside of the load space (12), the crane head (24) is first moved to an inward swivelling point (Pₛᵢ) on the swivelling arc (Rc), from which inward swivelling point (Pₛᵢ) the crane head (24) can be moved merely by slewing the crane (20) with respect to a vertical rotation axis (X_{c}) placed on its mounting point, to the inside of the load space (12) so that the grapple (30) mounted on the crane head (24) has sufficient space to pass between the two bunks (13) without touching them.

13. The method according to claim 11 or 12, **characterized in** selecting the centering point (P_{c}) so that it is spaced from the middlemost bunks (13) by a distance that is at least equal to the distance (t) between the outermost point of the grapple (30) mounted on the crane head (24) with respect to the mounting point of the grapple (30), and the mounting point of the grapple (30).

14. A system for controlling the crane of a forest machine, the system comprising a control unit (60), actuators (101 to 104) of the crane (20) and controllers (70, 71, 80, 81), in the forest machine, for activating control functions for controlling the control unit (60) controlling the actuators (101 to 104) of the crane (20) of the forest machine (10) and at least one function other than moving the crane (20), **characterized in that** the control unit (60) has been configured to control the crane (20) of the forest machine (10) according to a method according to any of the claims 1 to 13.

15. The system according to claim 14, **characterized in that** the system also comprises measuring elements (51 to 54) connected to the control unit (60) and provided in the crane (20) or the actuators (101 to 104) for moving the same, configured to measure the movements of the different booms (21 to 23) of the crane (20) and/or the actuators (101 to 104) for moving the same.

## Patentansprüche

1. Verfahren zum Steuern des Krans einer Forstmaschine, wobei bei dem Verfahren der Kran (20) der Forstmaschine (10) und mindestens eine andere Funktion als Bewegen des Krans (20) durch eine Steuereinheit (60) gesteuert werden, die durch Steuerfunktionen gesteuert wird, die durch Steuerungen (70, 71, 80, 81) in der Forstmaschine (10) aktiviert werden, **dadurch gekennzeichnet, dass** Aufrechterhalten der Steuerfunktion, die primär eine andere Funktion als Bewegen des Krans (20) steuert, für eine Zeit, die länger als eine vorgegebene Schwellenzeit ist, eine Operation aktivieren wird, bei der sich der Krankopf (24) entlang eines vorbestimmten Verfahrwegs (S1; S2) von einer ersten Lage (A1; B1) zu einer zweiten Lage (A2; B2) oder dort dazwischen bewegen wird, wenn die Steuerfunktion eine kürzere Dauer als die Zeit, die benötigt wird, damit sich der Krankopf (24) von der ersten Lage (A1; B1) zu der zweiten Lage (A2; B2) bewegt, jedoch länger als die Schwellenzeit aufweist.

2. Verfahren nach Anspruch 1, **dadurch gekennzeichnet, dass** Aktuatoren (101 bis 104) zum Bewegen des Krans (20) durch die Steuereinheit (60) in der Forstmaschine gesteuert werden, die einen Speicher (61) aufweist, in dem die Steuerfunktionen, die mindestens eine Operation umfassen, gespeichert werden können, und aus dem die gespeicherten Steuerfunktionen mittels Steuerfunktionen ausgeführt werden können, die zum Steuern einer anderen Steuerfunktion als zum Steuern der Bewegungen der Operation verwendet werden.

3. Verfahren nach Anspruch 2, **dadurch gekennzeichnet, dass** der Verfahrweg des Krankopfs (24), der der Operation entspricht, der Steuereinheit (60) durch Bewegen des Krankopfs (24) von der ersten Lage (A1; B1) zu der zweiten Lage (A2; B2) entlang eines gewünschten Verfahrwegs (S1; S2) unter Verwendung der primären Steuerfunktionen und gleichzeitig durch Speichern der Steuerfunktionen, die diesem Verfahrweg (S1; S2) entsprechen, in dem Speicher (61) der Steuereinheit (60) angelernt wird.

4. Verfahren nach Anspruch 2 oder 3, **dadurch gekennzeichnet, dass** die Position und die Lage des Krans (20) der Forstmaschine (10) durch Messelemente (51 bis 54) in dem Kran (20) oder den Aktuatoren (101 bis 104) zum Bewegen desselben gemessen werden, und dass die Bewegungen der unterschiedlichen Ausleger (21 bis 23) des Krans (20) und/oder der Aktuatoren (101 bis 104) zum Bewegen desselben in dem Speicher (61) der Steuereinheit (60) gespeichert werden.

5. Verfahren nach einem der Ansprüche 2 bis 4, **dadurch gekennzeichnet, dass** das Anlernen der Operation von Speichern der Steuerfunktion zum Steuern primär einer anderen Funktion als Bewegen des Krans (20), die für eine Zeit aufrechterhalten wird, die länger als die Schwellenzeit ist, um die durch den Kran (20) durchzuführende Operation zu aktivieren, gefolgt wird.

6. Verfahren nach einem der Ansprüche 1 bis 5, **dadurch gekennzeichnet, dass** die Steuerfunktion, durch die die Operation gesteuert wird, eine durch eine Steuerung (81) in der Forstmaschine (10) aktivierte Steuerfunktion ist, die nicht eine Funktion in dem Aktuator aktiviert, der während des Durchführens der Operation primär durch sie zu steuern ist, da der Aktuator, der primär zu steuern ist, sich bereits in einem Zustand befindet, in dem seine fortgesetzte Steuerung durch die Steuerfunktion nicht eine weitere Operation des Aktuators aktivieren wird.

7. Verfahren nach einem der Ansprüche 1 bis 6, **dadurch gekennzeichnet, dass** das Verfahren zum Steuern des Krans (20) in einem Rückezug (10) verwendet wird.

8. Verfahren nach Anspruch 7, **dadurch gekennzeichnet, dass** eine Steuerfunktion, die länger als die Schwellenzeit dauert, eine Operation aktivieren wird, bei der sich der Kopf des Krans (20) von einer ersten Lage (A1) in dem Laderaum (12) des Rückezugs (10) zu einer zweiten Lage (A2) außerhalb des Laderaums (12) bewegt.

9. Verfahren nach Anspruch 7, **dadurch gekennzeichnet, dass** eine Steuerfunktion, die länger als die Schwellenzeit dauert, eine Arbeitsbewegung aktivieren wird, bei der sich der Krankopf von einer ersten Lage (B1) außerhalb des Laderaums (12) des Rückezugs (10) zu einer zweiten Lage (B2) innerhalb des Laderaums (12) bewegen wird.

10. Verfahren nach Anspruch 8 oder 9, **dadurch gekennzeichnet, dass** die Operation durch Anwenden einer Steuerfunktion zum Aktivieren des Öffnens der Greifelemente (31) eines an dem Krankopf (24) montierten Greifers (30) gesteuert wird.

11. Verfahren nach einem der Ansprüche 7 bis 10, **dadurch gekennzeichnet, dass**, wenn der an dem Krankopf (24) montierte Greifer (30) von der Innenseite des Laderaums (12) des Rückezugs (10) zu der Außenseite des Laderaums (12) bewegt wird, der Krankopf (24) zuerst zu einem Zentrierpunkt (P_{c}) innerhalb des Laderaums (12) oder zu einem außenliegenden Schwenkpunkt (Pₛₒ) an einem durch ihn verlaufenden Schwenkbogen (R_{c}) bewegt wird, wobei der Bogen ein kreisförmiger Bogen ist, die Punkte (P_{c} und Pₛₒ) Punkte zwischen zwei Rungen (13) in der Längsrichtung des Laderaums (12) sind, wobei von diesen Punkten der Krankopf (24) lediglich durch Schwenken des Krans (20) in Bezug auf eine vertikale Schwenkachse (X_{c}), die auf seinen Montagepunkt platziert ist, zu der Außenseite des Laderaums (12) bewegt werden kann, so dass der an dem Krankopf (24) montierte Greifer (30) ausreichend Raum hat, um zwischen den zwei Rungen (13) zu passieren, ohne sie zu berühren.

12. Verfahren nach Anspruch 11, **dadurch gekennzeichnet, dass**, wenn der an dem Krankopf (24) montierte Greifer (30) von der Außenseite des Laderaums (12) des Rückezugs (10) zu der Innenseite des Laderaums (12) bewegt wird, der Krankopf (24) zuerst zu einem inneren Schwenkpunkt (Pₛᵢ) an dem Schwenkbogen (R_{c}) bewegt wird, wobei von dem inneren Schwenkpunkt (Pₛᵢ) der Krankopf (24) lediglich durch Schwenken des Krans (20) in Bezug auf eine vertikale Rotationsachse (X_{c}), die auf seinen Montagepunkt platziert ist, zu der Innenseite des Laderaums (12) bewegt werden kann, so dass der an dem Krankopf (24) montierte Greifer (30) ausreichend Raum hat, um zwischen den zwei Rungen (13) zu passieren, ohne sie zu berühren.

13. Verfahren nach Anspruch 11 oder 12, **gekennzeichnet durch** Auswählen des Zentrierpunkts (P_{c}) derart, dass er von den mittelsten Rungen (13) um einen Abstand beabstandet ist, der mindestens gleich dem Abstand (t) zwischen dem äußersten Punkt des an dem Krankopf (24) montierten Greifers (30) in Bezug auf den Montagepunkt des Greifers (30) und dem Montagepunkt des Greifers (30) ist.

14. System zum Steuern des Krans einer Forstmaschine, wobei das System eine Steuereinheit (60), Aktuatoren (101 bis 104) des Krans (20) und Steuerungen (70, 71, 80, 81) in der Forstmaschine zum Aktivieren von Steuerfunktionen zum Steuern der Steuereinheit (60), die die Aktuatoren (101 bis 104) des Krans (20) der Forstmaschine (10) und mindestens eine andere Funktion als Bewegen des Krans (20) steuert, umfasst, **dadurch gekennzeichnet, dass** die Steuereinheit (60) ausgelegt wurde, den Kran (20) der Forstmaschine (10) gemäß einem Verfahren nach einem der Ansprüche 1 bis 13 zu steuern.

15. System nach Anspruch 14, **dadurch gekennzeichnet, dass** das System zudem Messelemente (51 bis 54) umfasst, die mit der Steuereinheit (60) verbunden sind und in dem Kran (20) oder den Aktuatoren (101 bis 104) zum Bewegen desselben bereitgestellt sind, die ausgelegt sind, die Bewegungen der unterschiedlichen Ausleger (21 bis 23) des Krans (20) oder der Aktuatoren (101 bis 104) zum Bewegen desselben zu messen.

## Revendications

1. Procédé de commande de la grue d'un engin forestier, la grue (20) de l'engin forestier (10) et au moins une autre fonction que le déplacement de la grue (20) étant, dans ledit procédé, commandées par une unité (60) de commande qui est commandée par des fonctions de commande activées par des moyens (70, 71, 80, 81) de commande dans l'engin forestier (10), **caractérisé en ce que** le maintien de la fonction de commande commandant principalement une autre fonction que le déplacement de la grue (20) pendant un temps plus long qu'un temps seuil donné active une opération dans laquelle la tête (24) de grue se déplace le long d'un trajet (S1 ; S2) de déplacement prédéterminé d'un premier emplacement (A1 ; B1) à un second emplacement (A2 ; B2), ou entre ceux-ci, si ladite fonction de commande présente une durée plus courte que le temps mis par la tête (24) de grue pour se déplacer du premier emplacement (A1 ; B1) au second emplacement (A2 ; B2), mais plus longue que ledit temps seuil.

2. Procédé selon la revendication 1, **caractérisé en ce que** des actionneurs (101 à 104) servant à déplacer la grue (20) sont commandés par l'unité (60) de commande dans l'engin forestier, comprenant une mémoire (61) dans laquelle les fonctions de commande incluant au moins une opération peuvent être stockées et à partir de laquelle les fonctions de commande stockées peuvent être exécutées au moyen de fonctions de commande utilisées pour commander une autre fonction de commande que celle servant à commander les mouvements de l'opération.

3. Procédé selon la revendication 2, **caractérisé en ce que** le trajet de déplacement de la tête (24) de grue correspondant à l'opération est appris à l'unité (60) de commande en déplaçant la tête (24) de grue du premier emplacement (A1 ; B1) au second emplacement (A2 ; B2) le long d'un trajet (S1 ; S2) de déplacement souhaité en utilisant les fonctions de commande principales, et simultanément en stockant les fonctions de commande correspondant à ce trajet (S1 ; S2) de déplacement dans la mémoire (61) de l'unité (60) de commande.

4. Procédé selon la revendication 2 ou 3, **caractérisé en ce que** la position et l'emplacement de la grue (20) de l'engin forestier (10) sont mesurés par des éléments (51 à 54) de mesure dans la grue (20) ou les actionneurs (101 à 104) servant à la déplacer, et **en ce que** les mouvements des différentes flèches (21 à 23) de la grue (20), et/ou des actionneurs (101 à 104) servant à les déplacer, sont stockés dans la mémoire (61) dans l'unité (60) de commande.

5. Procédé selon l'une quelconque des revendications 2 à 4, **caractérisé en ce que** l'apprentissage de l'opération est suivi du stockage de la fonction de commande pour commander principalement une autre fonction que le déplacement de la grue (20), qui est maintenue pendant un temps plus long que ledit temps seuil, pour activer l'opération à effectuer par la grue (20) .

6. Procédé selon l'une quelconque des revendications 1 à 5, **caractérisé en ce que** la fonction de commande, par laquelle l'opération est commandée, est une fonction de commande activée par un moyen (81) de commande dans l'engin forestier (10), qui n'active pas une fonction dans l'actionneur à commander principalement par celle-ci pendant la réalisation de ladite opération, car ledit actionneur à commander principalement est déjà dans un état où la poursuite de sa commande par ladite fonction de commande n'activera pas une opération supplémentaire dudit actionneur.

7. Procédé selon l'une quelconque des revendications 1 à 6, **caractérisé en ce que** le procédé est utilisé pour commander la grue (20) dans un porteur (10).

8. Procédé selon la revendication 7, **caractérisé en ce qu'**une fonction de commande durant plus longtemps que ledit temps seuil active une opération dans laquelle la tête de la grue (20) se déplace d'un premier emplacement (A1) dans l'espace (12) de charge du porteur (10) à un second emplacement (A2) à l'extérieur de l'espace (12) de charge.

9. Procédé selon la revendication 7, **caractérisé en ce qu'**une fonction de commande durant plus longtemps que ledit temps seuil active un mouvement de travail dans lequel la tête de grue se déplace d'un premier emplacement (B1) à l'extérieur de l'espace (12) de charge du porteur (10) à un second emplacement (B2) à l'intérieur de l'espace (12) de charge.

10. Procédé selon la revendication 8 ou 9, **caractérisé en ce que** l'opération est commandé en appliquant une fonction de commande pour activer l'ouverture des organes (31) de préhension d'un préhenseur (30) monté sur la tête (24) de grue.

11. Procédé selon l'une quelconque des revendications 7 à 10, **caractérisé en ce que**, lorsque le préhenseur (30) monté sur la tête (24) de grue est déplacé de l'intérieur de l'espace (12) de charge du porteur (10) à l'extérieur de l'espace (12) de charge, la tête (24) de grue est d'abord déplacée jusqu'à un point (P_{c}) de centrage à l'intérieur de l'espace (12) de charge ou à un point (Pₛₒ) d'oscillation vers l'extérieur sur un arc (R_{c}) d'oscillation passant par celui-ci, l'arc étant un arc de cercle, les points (P_{c} et Pₛₒ) étant des points entre deux berceaux (13) dans la direction longitudinale de l'espace (12) de charge, la tête (24) de grue pouvant être déplacée à partir desdits points simplement en faisant pivoter la grue (20) par rapport à un axe vertical (X_{c}) d'oscillation placé sur son point de montage, à l'extérieur de l'espace (12) de charge, de telle façon que le préhenseur (30) monté sur la tête (24) de grue dispose d'un espace suffisant pour passer entre les deux berceaux (13) sans les toucher.

12. Procédé selon la revendication 11, **caractérisé en ce que**, lorsque le préhenseur (30) monté sur la tête (24) de grue est déplacé de l'extérieur de l'espace (12) de charge du porteur (10) à l'intérieur de l'espace (12) de charge, la tête (24) de grue est d'abord déplacée jusqu'à un point (Pₛᵢ) d'oscillation vers l'intérieur sur l'arc (R_{c}) d'oscillation, la tête (24) de grue pouvant être déplacée à partir dudit point (Pₛᵢ) d'oscillation vers l'intérieur simplement en faisant pivoter la grue (20) par rapport à un axe vertical (X_{c}) de rotation placé sur son point de montage, à l'intérieur de l'espace (12) de charge, de telle façon que le préhenseur (30) monté sur la tête (24) de grue dispose d'un espace suffisant pour passer entre les deux berceaux (13) sans les toucher.

13. Procédé selon la revendication 11 ou 12, **caractérisé par** la sélection du point (P_{c}) de centrage de telle façon qu'il soit écarté des berceaux médians (13) par une distance qui est au moins égale à la distance (t) entre le point extérieur extrême du préhenseur (30) monté sur la tête (24) de grue par rapport au point de montage du préhenseur (30), et le point de montage du préhenseur (30).

14. Système de commande de la grue d'un engin forestier, le système comportant une unité (60) de commande, des actionneurs (101 à 104) de la grue (20) et des moyens (70, 71, 80, 81) de commande, dans l'engin forestier, destinés à activer des fonctions de commande servant à commander l'unité (60) de commande commandant les actionneurs (101 à 104) de la grue (20) de l'engin forestier (10) et au moins une fonction autre que le déplacement de la grue (20), **caractérisé en ce que** l'unité (60) de commande a été configurée pour commander la grue (20) de l'engin forestier (10) conformément à un procédé selon l'une quelconque des revendications 1 à 13.

15. Système selon la revendication 14, **caractérisé en ce que** le système comporte également des éléments (51 à 54) de mesure reliés à l'unité (60) de commande et placés dans la grue (20) ou les actionneurs (101 à 104) servant à la déplacer, configurés pour mesurer les mouvements des différentes flèches (21 à 23) de la grue (20) et/ou des actionneurs (101 à 104) servant à les déplacer.
